# EUROPÄISCHE PATENTSCHRIFT

(11) **EP 4 224 051 B1**
(45) Veröffentlichungstag und Bekanntmachung des Hinweises auf die Patenterteilung: **13.08.2025**
(21) Anmeldenummer: 23153510.5
(22) Anmeldetag: 26.01.2023
(51) Int. Cl.: F16L 41/02, F16L 43/00

(54) **FLUIDLEITUNG-WINKELSTÜCK**
ANGLED FLUID CONDUIT PIECE
PIÈCE D'ANGLE POUR CONDUITE DE FLUIDE

(30) Priorität: 02.02.2022 DE 102022102462
(43) Veröffentlichungstag der Anmeldung: 09.08.2023
(73) Patentinhaber: Fränkische Rohrwerke Gebr. Kirchner GmbH + Co KG, 97486 Königsberg/Bayern (DE)
(72) Erfinder: Wagner, Michael, 97486 Königsberg (DE); Weiß, Christian, 97486 Königsberg (DE)
(74) Vertreter: Weickmann & Weickmann PartmbB

(56) Entgegenhaltungen:
- DE-U1- 202008 005 790
- DE-U1- 8 909 098
- US-A- 5 799 986
- US-A1- 2021 172 553

## Beschreibung

Die vorliegende Erfindung betrifft ein Fluidleitung-Winkelstück, welches in seinem Inneren einen Fluidströmungskanal definiert.

Es ist allgemein bekannt, dass Fluidleitungen oft auch gekrümmte Abschnitte umfassen müssen, um sich an gegebene Montagesituationen durch Umlenken der Fluidleitung anpassen zu können. Hierfür müssen die Fluidleitungen, insbesondere Kunststoff-Fluidleitungen, beispielsweise thermisch umgeformt werden, wodurch aber ein Montageaufwand deutlich gesteigert wird. Alternativ können vorgefertigte Umleitungsstücke verwendet werden, welche aber oftmals fertigungsbedingt keine sehr guten Strömungseigenschaften aufweisen.

Aus dem Dokument DE 20 2008 005790 U1 ist ein Fluidleitung-Winkelstück bekannt, welches ein Einlegeteil und ein restliches Fluidleitung-Winkelstück umfasst, wobei das Fluidleitung-Winkelstück einen Fluidströmungskanal aufweist, welcher gerade Abschnitte und einen gekrümmten Abschnitt umfasst. Ferner sei auf die Dokumente DE 89 09 098 U1 und US 5 799 986 A hingewiesen.

Es ist daher die Aufgabe der vorliegenden Erfindung, ein Fluidleitung-Winkelstück bereitzustellen, welches verbesserte Strömungseigenschaften aufweist.

Diese Aufgabe wird erfindungsgemäß durch ein Fluidleitung-Winkelstück nach Anspruch 1 gelöst.

Es sei bereits an dieser Stelle darauf hingewiesen, dass der voranstehend beschriebene Aufbau des Fluidleitung-Winkelstücks nicht nur im Zuge des Herstellungsprozesses, sondern gerade auch am fertigen Produkt erkennbar ist. Insbesondere lässt sich dieser Aufbau an dem Übergang zwischen dem ursprünglichen Einlegeteil und dem restlichen Fluidleitung-Winkelstück anhand einer feinen Naht bzw. einer in Umfangsrichtung verlaufenden Rille an einer Innenwandung des Fluidströmungskanals erkennen.

Ferner lässt sich der erfindungsgemäße Aufbau des Fluidleitung-Winkelstücks auch daran erkennen, dass die Innenwandung des Fluidströmungskanals in dem dritten Abschnitt, insbesondere an einer radial inneren Seite in Bezug auf einen Krümmungsmittelpunkt bzw. eine Krümmungsachse, um welche der dritte Abschnitt des Fluidströmungskanals, im Falle eines über den dritten Abschnitt des Fluidströmungskanals gleichbleibenden Querschnitts, rotiert wird, im Wesentlichen glatt, das heißt ohne deutliche Kanten oder sprunghafte Übergänge, ausgebildet ist. Bei herkömmlichen Fluidleitung-Winkelstücken, welche beispielsweise unter Verwendung eines einzigen Spritzgussverfahrens vollständig hergestellt werden, müssen Kerne an denjenigen Stellen bereitgestellt werden, an welchen am finalen Produkt der Fluidströmungskanal ausgebildet sein soll. Da aber diese Kerne nicht um Ecken herum geführt werden können, ergibt sich üblicherweise an der in Bezug auf einen Krümmungsmittelpunkt radial inneren Seite eines gekrümmten Fluidströmungskanals eine Kante, welche an denjenigen Stellen nach radial innen vorsteht, an welche die Kerne nicht reichen können.

Gemäß der vorliegenden Erfindung ist es vorgesehen, das Einlegeteil vor der Fertigstellung des gesamten Fluidleitung-Winkelstücks gesondert auszubilden. Insbesondere kann das Einlegeteil ausschließlich den dritten Abschnitt umfassen bzw. ausbilden. Das heißt, in anderen Worten, dass das Einlegeteil ausschließlich einen gekrümmten Fluidströmungskanal aufweisen kann und frei von sich gerade erstreckenden Abschnitten des in dem Einlegeteil gebildeten Fluidströmungskanals sein kann. Zur Ausbildung des glatt verlaufenden Fluidströmungskanals können dann beispielsweise schwenkbare Kerne verwendet werden.

Der erste Abschnitt und/oder der zweite Abschnitt bzw. eine den ersten Abschnitt des Fluidströmungskanals und/oder eine den zweiten Abschnitt des Fluidströmungskanals umgebende Wandung des Fluidleitung-Winkelstücks können/kann zur Aufnahme eines Rohrs, einer Steckverbindung oder einer Pressverbindung eingerichtet sein und zum Beispiel mit entsprechenden Ausnehmungen versehen sein. Beispielsweise können/kann der erste Abschnitt und/oder der zweite Abschnitt des Fluidströmungskanals eine longitudinale Erstreckung von 20 mm bis 50 mm, insbesondere von 25 mm bis 40 mm, aufweisen. Für den Fall, dass an dem Fluidleitung-Winkelstück eine Presshülse zur Verbindung mit einer weiteren Fluidleitung, zum Beispiel einem Rohr, angebracht werden soll, können der erste Abschnitt und/oder der zweite Abschnitt des Fluidströmungskanals als Stützkörper dienen.

Das Einlegeteil kann in der Art eines gekrümmten Rohrstücks ausgebildet sein, welches entlang seines Fluidströmungskanals einen im Wesentlichen konstanten Innendurchmesser aufweist. Diese Ausbildung ist eine mögliche, spezielle Ausführungsform des Fluidleitung-Winkelstücks mit einem glatt verlaufenden, gekrümmten Fluidströmungskanal. Ein im Wesentlichen konstanter Innendurchmesser des Fluidströmungskanals kann sich beispielsweise bei Verwendung der oben erwähnten schwenkbaren Kerne ergeben.

Das Einlegeteil kann zum Beispiel unter Verwendung eines Spritzgussverfahrens oder eines Metallgießverfahrens hergestellt sein.

Erfindungsgemäß ist das restliche Fluidleitung-Winkelstück unter Verwendung eines Spritzgussverfahrens hergestellt. Spritzgussverfahren ermöglichen eine kostengünstige Fertigung einer großen Anzahl gleicher Bauteile bei sehr guter gleichbleibender Maßhaltigkeit.

Dabei kann das Einlegeteil außen durch das restliche Fluidleitung-Winkelstück zumindest teilweise, insbesondere vollständig, umspritzt sein. Das heißt, das Einlegeteil, welches bereits gesondert ausgebildet worden ist, kann in eine Form einer Spritzgussanlage eingelegt werden und umspritzt werden, um das vollständige Fluidleitung-Winkelstück auszubilden. Insbesondere kann sich dabei das eingespritzt Material durch Schrumpfung passgenau an das Einlegeteil anlegen.

Ferner ist das Einlegeteil und/oder das restliche Fluidleitung-Winkelstück aus einem Hochtemperaturkunststoff ausgebildet. Insbesondere können das Einlegeteil und das restliche Fluidleitung-Winkelstück aus einem gleichen Hochtemperaturkunststoff ausgebildet sein. Hochtemperaturkunststoffe werden üblicherweise bei Spritztemperaturen von über 300°C verarbeitet. Bei derartig hohen Temperaturen ist es üblicherweise erforderlich, die verwendeten Kerne zu kühlen. Ferner ist es gerade bei solch hohen Temperaturen nicht möglich, Zerfallskerne zu benutzen.

In diesem Zusammenhang können/kann das Einlegeteil und/oder das restliche Fluidleitung-Winkelstück aus PPSU ausgebildet sein.

In einer Weiterbildung der vorliegenden Erfindung kann das Fluidleitung-Winkelstück über seinen gesamten Fluidströmungskanal hinweg einen im Wesentlichen konstanten Durchmesser aufweisen. Auf diese Weise kann neben dem oben beschriebenen glatten Verlauf des gekrümmten Abschnitts (dritten Abschnitts) des Fluidströmungskanals auch ein glatter Übergang der inneren Wandung des Fluidströmungskanals von dem dritten Abschnitt zu dem ersten Abschnitt bzw. von dem dritten Abschnitt zu dem zweiten Abschnitt erreicht werden. So können über das gesamte Fluidleitung-Winkelstück hinweg gute Strömungseigenschaften erreicht werden.

Eine Ebene, welche durch eine Stirnfläche einer ersten Öffnung des Einlegeteils definiert ist, kann zu einer Ebene, welche durch eine Stirnfläche einer zweiten Öffnung des Einlegeteils definiert ist, einen Winkel von 45° bis 135°, insbesondere einen Winkel von 60° bis 120°, bevorzugt einen Winkel von 90°, aufweisen. Die voranstehend angeführten Winkel können insbesondere mit einem stetigen Krümmungsverlauf des dritten Abschnitts des Fluidströmungskanals kombiniert werden. Somit würde sich beispielsweise ein Einlegeteil, welches zwischen den beiden Stirnflächen einen Winkel von 90° ausbildet, über einen Viertelkreis erstrecken.

Für den Fall, dass das Fluidleitung-Winkelstück nicht nur als Umlenkung, sondern auch gleich als Verzweigungsstück dienen soll, kann das Fluidleitung-Winkelstück eine dritte Öffnung und einen der dritten Öffnung zugeordneten vierten geraden Abschnitt umfassen. So kann beispielsweise Fluid, welches an der ersten Öffnung eintritt, sowohl aus der zweiten Öffnung als auch aus der dritten Öffnung austreten. Aus den beiden Austrittsöffnungen kann über einen gleichen Zeitraum im Wesentlichen gleich viel Fluid austreten oder es können sich je nach Orientierung der Öffnungen zueinander und der Durchmesser der Öffnungen unterschiedliche Austrittsvolumina ergeben.

In einer besonderen Ausführungsform eines solchen Verzweigungsstücks, kann eine durch den vierten Abschnitt definierte Mittelachse zu der Mittelachse des zweiten Abschnitts parallel, insbesondere konzentrisch, angeordnet sein. So ergibt sich ein sogenanntes T-Stück.

Alternativ kann eine Mittelachse des vierten Abschnitts zu der Mittelachse des zweiten Abschnitts gewinkelt ausgerichtet sein. Für den Fall, dass ein Winkel zwischen der Mittelachse des vierten Abschnitts des in dem Fluidleitung-Winkelstück ausgebildeten Fluidströmungskanals und der Mittelachse, welche durch den ersten Abschnitt verläuft, zu einem Winkel, welcher zwischen der Mittelachse des zweiten Abschnitts und der Mittelachse des ersten Abschnitts gebildet ist, verschieden ist, kann sich ein nicht-symmetrisches Verzweigungsstück ergeben.

Für den Fall jedoch, dass ein Winkel zwischen der Mittelachse des vierten Abschnitts zu der Mittelachse des ersten Abschnitts im Wesentlichen identisch zu einem Winkel zwischen der Mittelachse des zweiten Abschnitts zu der Mittelachse des ersten Abschnitts ist, kann sich ein symmetrisch ausgebildetes Verzweigungsstück ergeben, welches, insbesondere wenn der voranstehend erwähnte Winkel von 90° verschieden ist, auch als Y-Stück bezeichnet werden kann.

Vorteilhafterweise kann eine Wandstärke des Einlegeteils an einer in Bezug auf einen zugeordneten Krümmungsmittelpunkt radial inneren Seite größer sein als eine Wandstärke an seiner radial äußeren Seite. Da, wie bereits weiter oben beschrieben, die bei der Ausbildung des gesamten Fluidleitung-Winkelstücks, insbesondere beim Umspritzen des Einlegeteils durch das restliche Fluidleitung-Winkelstück, verwendeten Kerne die radial innere Seite des dritten Abschnitts nicht erreichen und damit nicht abstützen können, kann es in Verbindung mit den hohen Drücken, welche bei der Fertigung selbst und aufgrund der anschließenden Schrumpfungsprozesse des Materials entstehen, vorteilhaft sein, eine Wandstärke der radial inneren Seite des dritten Abschnitts verhältnismäßig stark auszubilden, so dass das Einlegeteil in der Lage ist, den auftretenden Kräften selbstständig standhalten zu können.

Je nach gewünschter Ausbildung des gesamten Fluidleitung-Winkelstücks, kann auch eine Wandstärke des Winkelstücks im dritten Abschnitt an einer in Bezug auf einen zugeordneten Krümmungsmittelpunkt radial inneren Seite größer sein als eine Wandstärke an seiner radial äußeren Seite. Dies ist insbesondere dann der Fall, wenn das Einlegeteil umfänglich mit gleich viel Material umspritzt wird. Somit kann sich das Verhältnis der radial inneren und äußeren Wandstärken des Einlegeteils in etwa auf das fertige Winkelstück übertragen.

Das Fluidleitung-Winkelstück kann im Bereich des dritten Abschnitts des Fluidströmungskanals an wenigstens einem seiner Enden, insbesondere an beiden Enden, entlang des darin gebildeten Fluidströmungskanals betrachtet, an seiner Außenseite einen in Umfangsrichtung relativ zu einer Mittellinie des Fluidströmungskanals verlaufenden Kragen aufweisen. Als "Enden" des dritten Abschnitts des Fluidströmungskanals können insbesondere die Übergänge von dem dritten Abschnitt in den ersten Abschnitt bzw. von dem dritten Abschnitt in den zweiten Abschnitt oder, falls vorhanden, von dem dritten Abschnitt in einen weiteren Abschnitt betrachtet werden. Der Kragen kann insbesondere über seinen gesamten Umfang in Bezug auf die Mittellinie des Fluidströmungskanals einen im Wesentlichen gleichen Außendurchmesser aufweisen. Der Kragen kann insbesondere dazu eingerichtet sein, eine Anlagefläche für eine Anbindehülse, welche insbesondere mit einem Bereich des Fluidleitung-Winkelstücks verbindbar ist, welcher einem der geraden Abschnitte des Fluidströmungskanals an einer radialen Außenseite zugeordnet ist, oder einen Verbindungsabschnitt für einen Fixierring eines Pressfittings bereitzustellen. Der Fixierring kann mit dem Kragen beispielsweise verrasten, um so den Pressfitting bzw. eine Presshülse davon im Wesentlichen konzentrisch zu dem jeweiligen geraden Abschnitt (erster oder zweiter Abschnitt) zu halten.

Nachzutragen ist noch, dass an der Stirnfläche der ersten Öffnung des Einlegeteils und/oder an der Stirnfläche der zweiten Öffnung des Einlegeteils Fasen angeordnet sind. Alternativ oder zusätzlich zu den Fasen können auch Verrundungen vorgesehen sein. So kann beispielsweise ein radial äußerer Rand der beiden Stirnflächen mit einer Verrundung versehen sein, also einem Radius, welcher von der jeweiligen Stirnfläche des Einlegeteils in eine äußere Umfangswandung übergeht. Ferner weist erfindungsgemäß ein radial innerer Rand der Stirnfläche der ersten und/oder der zweiten Öffnung des Einlegeteils eine Fase auf. So kann die Stirnfläche der ersten und/oder der zweiten Öffnung über die Fase in den im Inneren des Einlegeteils definierten Fluidströmungskanal übergehen. Diese Fase dient zur Zentrierung eines jeweiligen Stützdorns bei der Umspritzung des Einlegeteils.

Die Stirnfläche der ersten Öffnung des Einlegeteils und/oder die Stirnfläche der zweiten Öffnung des Einlegeteils können/kann sich im Wesentlichen planar erstrecken und insbesondere eine sich in einer Ebene erstreckenden, zum Beispiel ringförmig ausgebildeten, Fläche aufweisen. Die Stirnfläche der ersten Öffnung des Einlegeteils und/oder die Stirnfläche der zweiten Öffnung des Einlegeteils, insbesondere deren Ebenen der Stirnflächen, können eine Achse eines daran jeweils angrenzenden Fluidströmungskanals im Wesentlichen rechtwinklig schneiden. In anderen Worten kann die Achse eines daran jeweils angrenzenden Fluidströmungskanals im Wesentlichen eine Normale der zugehörigen Stirnfläche bzw. deren Ebene bilden.

Des Weiteren kann eine radial innere Wandung des gekrümmten Einlegeteils, in Bezug auf einen Krümmungsmittelpunkt des Einlegeteils, eine Aufdickung aufweisen, welche sich nahe zu einer (gedachten) Schnittkante der Stirnfläche der ersten Öffnung des Einlegeteils und der Stirnfläche der zweiten Öffnung des Einlegeteils erstreckt. Beispielsweise kann der Krümmungsmittelpunkt des Einlegeteils in einem Bereich der Aufdickung des Einlegeteils liegen. Diese Aufdickung kann eine verbesserte Stabilität gegenüber dem Spritzgußdruck bei der Herstellung des vollständigen Fluidleitung-Winkelstücks bereitstellen. In einer Breitenrichtung betrachtet, welche sich insbesondere entlang der Schnittkante der Stirnfläche der ersten Öffnung des Einlegeteils und der Stirnfläche der zweiten Öffnung des Einlegeteils erstreckt, kann sich die Aufdickung in etwa über 50% der Ausdehnung des Einlegeteils in Breitenrichtung erstrecken und kann relativ zu der Ausdehnung des Einlegeteils in Breitenrichtung mittig, insbesondere symmetrisch, angeordnet sein.

Im Folgenden wird die vorliegende Erfindung in größerem Detail mit Bezug auf die begleitenden Zeichnungen erläutert werden. Es stellt dar:
- Figur 1: eine perspektivische Ansicht eines erfindungsgemäßen Fluidleitung-Winkelstücks;
- Figur 2: eine Schnittansicht der Ansicht aus Figur 1;
- Figur 3: eine perspektivische Ansicht eines Einlegeteils des erfindungsgemäßen Fluidleitung-Winkelstücks;
- Figur 4: eine Schnittansicht der Ansicht aus Figur 3;
- Figur 5: eine weitere perspektivische Ansicht des Fluidleitung-Winkelstücks aus Figur 1;
- Figur 6: eine perspektivische Ansicht einer weiteren Ausführungsform eines Einlegeteils des erfindungsgemäßen Fluidleitung-Winkelstücks; und
- Figur 7: eine Schnittansicht einer weiteren Ausführungsform eines erfindungsgemäßen Fluidleitung-Winkelstücks.

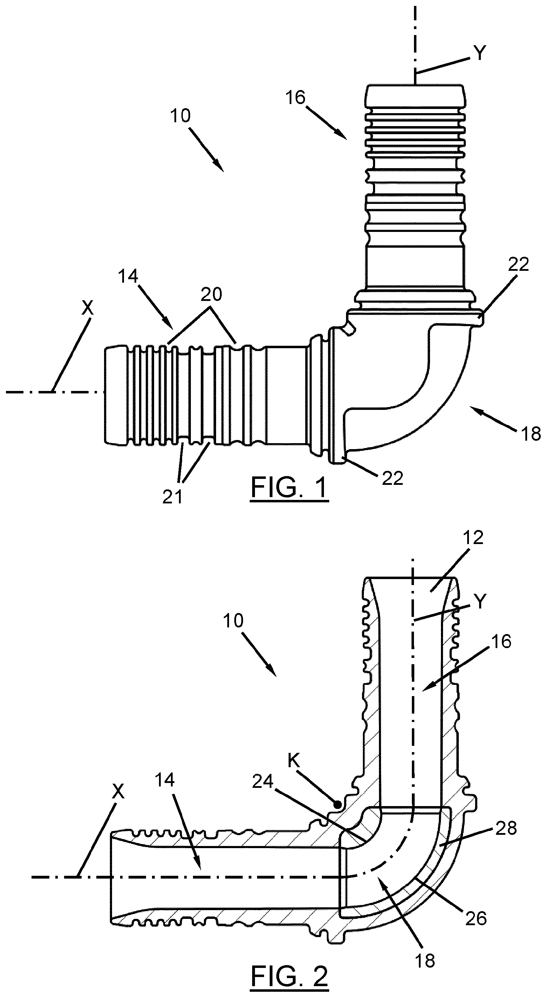

In Figur 1 ist ein erfindungsgemäßes Fluidleitung-Winkelstück allgemein mit dem Bezugszeichen 10 bezeichnet. Das Fluidleitung-Winkelstück 10 weist einen darin ausgebildeten Fluidströmungskanal 12 auf. Der Fluidströmungskanal 12 erstreckt sich über einen ersten gerade verlaufenden Abschnitt 14, einen zweiten gerade verlaufenden Abschnitt 16 und einen dritten gekrümmt verlaufenden Abschnitt 18, welcher zwischen dem ersten Abschnitt 14 und dem zweiten Abschnitt 16 angeordnet ist.

An dem ersten Abschnitt 14 und dem zweiten Abschnitt 16 öffnet sich der Fluidströmungskanal 12 zu einer Außenseite hin, so dass Fluid, welches in der Öffnung des ersten Abschnitts 14 eintritt, durch das Fluidleitung-Winkelstück 10 hindurchströmen und aus der Öffnung des zweiten Abschnitts 16 austreten kann. Dem Fluidströmungskanal 12 kann eine durchgängige Mittellinie zugeordnet werden, welche sich entsprechend in den geraden Abschnitten 14 und 16 als Mittelachsen X und Y erstreckt.

Ein Winkel zwischen den beiden Mittelachsen X und Y beträgt in dem hier dargestellten Ausführungsbeispiel im Wesentlichen 90°.

Eine äußere Seite der Wandung, welche den ersten Abschnitt 14 bzw. den zweiten Abschnitt 16 umgibt ist mit einer Mehrzahl an Ausnehmungen 20 versehen, welche beispielsweise dazu eingerichtet sein können, mit einem darauf aufgeschobenen Rohr einzugreifen, insbesondere, wenn das Rohr über eine mit dem Fluidleitung-Winkelstück 10 verbundenen Presshülse in die Ausnehmungen 20 gepresst wird. Ferner sind hier an der äußeren Seite der Wandung Nuten 21 für Dichtungselemente, wie beispielsweise O-Ringe, vorgesehen.

An einem Übergang des geraden Abschnitts, welcher dem ersten Abschnitt 14 oder dem zweiten Abschnitt 16 zugeordnet ist, zu einem gekrümmten Abschnitt der äußeren Wandung des Fluidleitung-Winkelstücks 10 ist hier jeweils ein Kragen 22 angeordnet, welcher einen im Wesentlichen gleichmäßigen Außendurchmesser über seinen gesamten Umfang relativ zu der Mittelachse X bzw. der Mittelachse Y aufweist. Der jeweilige Kragen 22 ist insbesondere dazu eingerichtet, für das oben erwähnte Rohr einen definierten Anschlag oder für die oben erwähnte Presshülse einen Verbindungsabschnitt bereitzustellen.

In Figur 2 ist das Fluidleitung-Winkelstück 10 aus Figur 1 in einer geschnittenen Ansicht dargestellt. Hier lässt sich insbesondere erkennen, dass eine radial innere Seite 24 des Fluidströmungskanals 12 im Bereich des dritten Abschnitts 18 in Bezug auf einen Krümmungsmittelpunkt K einen stetigen, das heißt einen im Wesentlichen glatten, Verlauf aufweist, welcher in dem hier dargestellten Ausführungsbeispiel im dargestellten Schnitt als Kreisbogen ausgebildet ist.

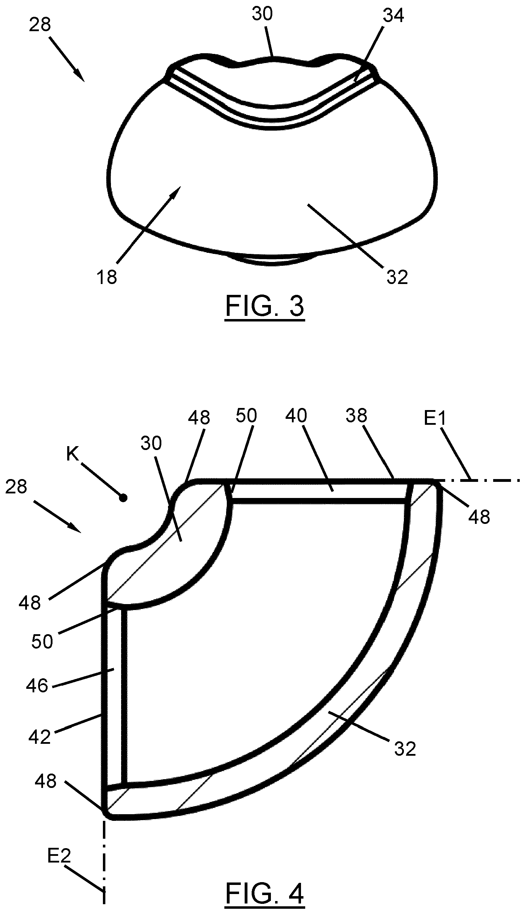

Es ist ferner zu erkennen, dass eine Wandstärke, welche sich relativ zu dem Krümmungsmittelpunkt K radial innen an die radial innere Seite 24 des dritten Abschnitts 18 des Fluidströmungskanals 12 anschließt, stärker ausgebildet ist als eine Wandstärke radial außerhalb einer radial äußeren Seite 26 des dritten Abschnitts 18 des Fluidströmungskanals 12. Dieser Wandstärkenunterschied des Fluidleitung-Winkelstücks 10 setzt sich von einem bereits vorhandenen Wandstärkenunterschied eines Einlegeteils 28 (siehe auch Figuren 3 und 4) fort.

Das Einlegeteil 28 ist ein Element, welches vor der Ausbildung des gesamten Fluidleitung-Winkelstücks 10 bereits gesondert hergestellt worden ist. Dabei bildet das Einlegeteil 28 hier in seinem Inneren ausschließlich den dritten Abschnitt 18 des Fluidströmungskanals 12 aus. Das heißt, der Fluidströmungskanal 12, welcher in dem Einlegeteil 28 ausgebildet ist, ist hier ausschließlich gekrümmt und frei von sich gerade erstreckenden Abschnitten.

Das Einlegeteil 28 bzw. der darin ausgebildete dritte Abschnitt 18 des Fluidströmungskanals 12 kann beispielsweise unter Verwendung von wenigstens einem schwenkbaren und entsprechend gekrümmt ausgebildeten Kern hergestellt werden, um welchen das Material, aus welchem das Einlegeteil 28 gebildet ist, beispielsweise PPSU, gespritzt wird und welcher anschließend aus dem ausgehärteten Einlegeteil 28 heraus geschwenkt werden kann. Auf diese Weise kann der vollständig gekrümmte und mit einem gleichbleibenden Innendurchmesser ausgebildete dritte Abschnitt 18 des Fluidströmungskanals 12 hergestellt werden, ohne dass es dabei zu einer Ausbildung von Kanten oder Stufen kommen würde.

Es ist in der perspektivischen Ansicht von Figur 3 als auch in der Schnittansicht von Figur 4 des Einlegeteils 28 zu erkennen, dass eine radial innere Wandung 30 in Bezug auf einen Krümmungsmittelpunkt K dicker ausgebildet ist als eine radiale äußere Wandung 32 des Einlegeteils 28. Der Vorteil, die radial innere Wandung 30 stärker auszubilden als die radial äußere Warnung 32 liegt darin, dass das Einlegeteil 28 zwar bei seiner eigenen Herstellung gut von dem dabei verwendeten wenigstens einen Kern gestützt werden kann, dass aber bei der Ausbildung des vollständigen Fluidleitung-Winkelstücks 10 ein Hohlraum zwischen den hierfür verwendeten Kernen und demjenigen Teil der radial inneren Wandung 30 des Einlegeteils 28 entsteht, welcher die radial innere Seite 24 des Fluidströmungskanals 12 ausbildet. Um somit ohne Unterstützung durch die Kerne den hohen Drücken standhalten zu können, welche auftreten, wenn das Einlegeteil 28 mit dem Material zur Ausbildung des vollständigen Fluidleitung-Winkelstücks 10 umspritzt wird bzw. wenn dieses Material abkühlt und sich dabei zusammenzieht, ist hier die radial innere Wandung 30 verstärkt worden.

Das Einlegeteil 28 wird im Wesentlichen einheitlich mit Material umgeben, so dass es in das finale Fluidleitung-Winkelstück 10 eingebunden wird. Dies ist in der Schnittansicht von Figur 2 beispielsweise durch die im Wesentlichen gleiche Wandstärke des Materials radial innen und radial außen gezeigt, welches das Einlegeteil 28 umgibt.

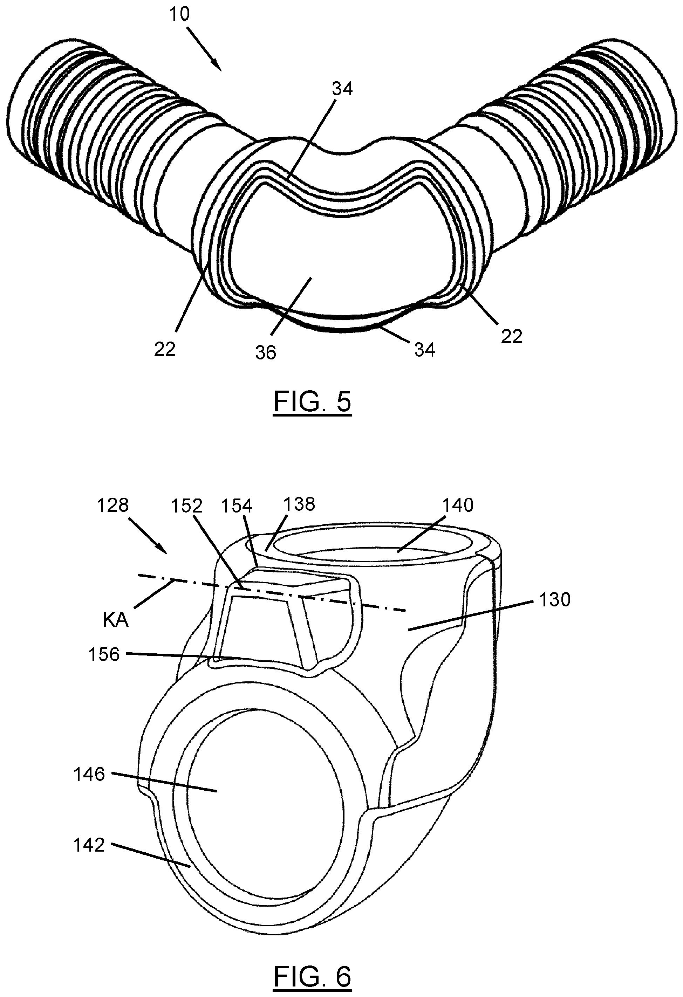

Der Übergang der unterschiedlichen Wandstärken des Einlegeteils 28 verläuft hier entlang der Außenseite von der radial inneren Seite 30 zu der radial äußeren Seite 32 nicht gleichmäßig, sondern eher sprunghaft über eine Kante 34. Entsprechend der voranstehend erwähnten im Wesentlichen einheitlichen Ummantelung des Einlegeteils 28 mit Material zur Ausbildung des Fluidleitung-Winkelstücks 10 bildet sich die Kante 34 des Einlegeteils 28 zu einer Außenseite des fertigen Fluidleitung-Winkelstücks 10 ab. Dies ist insbesondere in den Figuren 1 und 5 gut zu erkennen. Durch die Form des hier dargestellten Ausführungsbeispiels des Fluidleitung-Winkelstücks 10 ergibt sich ein vertiefter Bereich 36, welcher in Umfangsrichtung durch die beiden in Bezug auf den des Fluidströmungskanal 12 diametral gegenüberliegenden Kanten 34 und in einer Richtung entlang der Erstreckung des Fluidströmungskanals 12 durch die beiden Krägen 22 begrenzt ist.

In dem gezeigten Ausführungsbeispiel ist sowohl das Einlegeteil 28 als auch das Material zur Ausbildung des restlichen Fluidleitung-Winkelstücks 10 aus PPSU hergestellt.

In dem Fall, dass das Einlegeteil ausschließlich einen gekrümmt verlaufenden Fluidströmungskanals 12 aufweist, kann eine Erstreckung des Fluidströmungskanals 12 des Einlegeteils 28 zum Beispiel über einen Winkel einer Ebene E1, welche durch eine Stirnfläche 38 einer ersten Öffnung 40 des Einlegeteils 28 definiert ist, zu einer Ebene E2, welche durch eine Stirnfläche 42 einer zweiten Öffnung 44 des Einlegeteils 28 definiert ist, bestimmt werden. Dieser Winkel kann von 45° bis 135°, insbesondere einen Winkel von 60° bis 120°, bevorzugt einen Winkel von 90° (so wie in Fig. 4), aufweisen.

An der Stirnfläche 38 der ersten Öffnung 40 des Einlegeteils 28 und/oder an der Stirnfläche 42 der zweiten Öffnung 46 des Einlegeteils 28 sind hier Verrundungen 48 und Fasen 50 angeordnet.

Des Weiteren kann eine radial innere Wandung des gekrümmten Einlegeteils, in Bezug auf einen Krümmungsmittelpunkt des Einlegeteils, eine Aufdickung aufweisen, welche sich nahe zu einer (gedachten) Schnittkante der Stirnfläche der ersten Öffnung des Einlegeteils und der Stirnfläche der zweiten Öffnung des Einlegeteils erstreckt. Beispielsweise kann der Krümmungsmittelpunkt des Einlegeteils in einem Bereich der Aufdickung des Einlegeteils liegen. Diese Aufdickung kann eine verbesserte Stabilität gegenüber dem Spritzgußdruck bei der Herstellung des vollständigen Fluidleitung-Winkelstücks bereitstellen. In einer Breitenrichtung betrachtet, welche sich insbesondere entlang der Schnittkante der Stirnfläche der ersten Öffnung des Einlegeteils und der Stirnfläche der zweiten Öffnung des Einlegeteils erstreckt, kann sich die Aufdickung in etwa über 50% der Ausdehnung des Einlegeteils in Breitenrichtung erstrecken und kann relativ zu der Ausdehnung des Einlegeteils in Breitenrichtung mittig, insbesondere symmetrisch, angeordnet sein.

In Figur 5 ist eine zweite Ausführungsform des Einlegeteils zu sehen. Die zweite Ausführungsform des Einlegeteils wird im Vergleich zu der ersten Ausführungsform des Einlegeteils 28 mit Bezugszeichen bezeichnet, welche um 100 erhöht sind. Im Folgenden soll maßgeblich auf die Unterschiede der zweiten Ausführungsform des Einlegeteils 128 zu der ersten Ausführungsform des Einlegeteils 28 eingegangen werden. Im Übrigen sei auf die Ausführungen zu der ersten Ausführungsform des Einlegeteils 28 verwiesen, welche analog auf die zweite Ausführungsform des Einlegeteils 128 anwendbar sein können, und umgekehrt.

Das Einlegeteil 128 weist eine Aufdickung 152 auf, welche sich von einer, in Bezug auf die Krümmungsachse KA, radial inneren Wandung 130 von einer ersten Öffnung 140 und einer zweiten Öffnung 146 des Einlegeteils 128 in Richtung der Krümmungsachse KA erstreckt. Die Aufdickung 152 verläuft hier nicht bündig von den Stirnflächen 138 und 142 der beiden Öffnungen 140 und 146 in Richtung der Krümmungsachse KA, sondern ist unter Ausbildung einer jeweiligen Stufe 154 bzw. 156 relativ zu den Stirnflächen 138 und 142 leicht versetzt. Eine bündige Ausbildung der Aufdickung 152 zu den Stirnflächen 138 und 142 ist jedoch durchaus denkbar.

In Breitenrichtung betrachtet, d.h. einer Richtung, welche entlang der Krümmungsachse KA verläuft, ist die Aufdickung 152 relativ zu dem restlichen Einlegeteil 128 mittig angeordnet. Das heißt, eine Symmetrieebene der Aufdickung 152, zu welcher die Breitenrichtung bzw. die Krümmungsachse KA orthogonal verläuft, ist hier mit einer Symmetrieebene des restlichen Einlegeteils 128 zusammenfallend angeordnet. Die Aufdickung 152 erstreckt sich hier in der Breitenrichtung über eine Länge, welche in etwa 50% der Ausdehnung des restlichen Einlegeteils 128 in dieser Breitenrichtung entspricht.

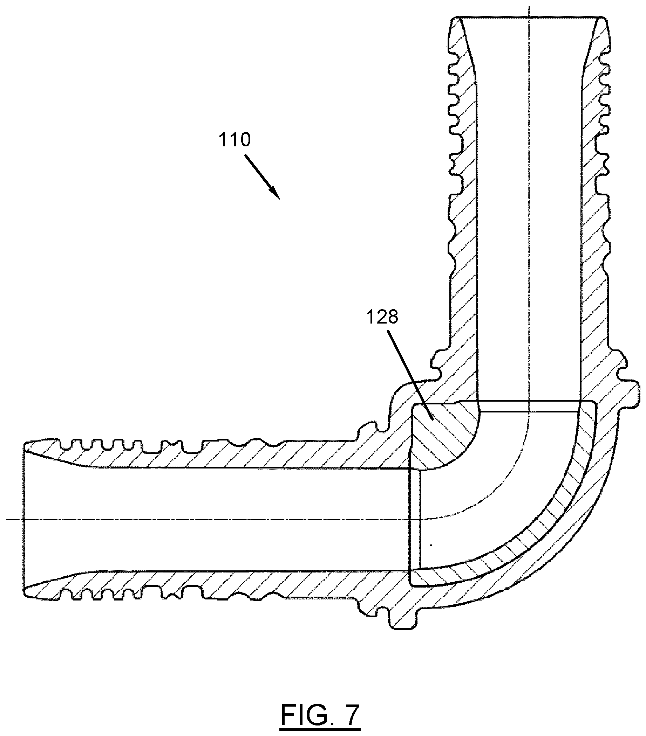

In Figur 7 ist nun in einer Seitenquerschnittsansicht dargestellt, wie die zweite Ausführungsform des Einlegeteils 128 in einer entsprechenden zweiten Ausführungsform des Fluidleitung-Winkelstücks 110 eingebettet ist. Dabei ist zu erkennen, dass auch die zweite Ausführungsform des Einlegeteils 128 vollständig von dem das restliche Fluidleitung-Winkelstück 110 bildenden Material umgeben bzw. umspritzt ist.

## Patentansprüche

1. Fluidleitung-Winkelstück (10, 110), welches in seinem Inneren einen Fluidströmungskanal (12) definiert,
wobei sich der Fluidströmungskanal (12) an wenigstens einer ersten und einer zweiten Öffnung zu einer Außenseite des Fluidleitung-Winkelstücks (10, 110) hin öffnet, sodass Fluid in den Fluidströmungskanal (12) eintreten oder aus diesem austreten kann,
wobei der Fluidströmungskanal (12) einen der ersten Öffnung zugeordneten ersten Abschnitt (14), welcher sich im Wesentlichen gerade erstreckt, einen der zweiten Öffnung zugeordneten zweiten Abschnitt (16), welcher sich im Wesentlichen gerade erstreckt, und einen dritten Abschnitt (18) aufweist, welcher zwischen dem ersten Abschnitt (14) und dem zweiten Abschnitt (16) gekrümmt verläuft,
wobei eine durch den ersten Abschnitt (14) definierte Mittelachse (X) zu einer durch den zweiten Abschnitt (16) definierten Mittelachse (Y) gewinkelt angeordnet ist,
wobei das Fluidleitung-Winkelstück (10, 110) ein vorab hergestelltes Einlegeteil (28, 128) umfasst, welches in seinem Inneren den dritten Abschnitt (18) des Fluidströmungskanals (12) zumindest abschnittsweise definiert,
wobei das Einlegeteil (28, 128) außen durch ein restliches Fluidleitung-Winkelstück (10, 110) zumindest teilweise unter Verwendung eines Spritzgussverfahrens umspritzt ist,
**dadurch gekennzeichnet, dass** das Einlegeteil (28, 128) und/oder das restliche Fluidleitung-Winkelstück (10, 110) aus einem Hochtemperaturkunststoff ausgebildet sind, und
dass ein radial innerer Rand einer Stirnfläche der ersten und/oder der zweiten Öffnung des Einlegeteils (28, 128) eine Fase (50) aufweist, welche dazu eingerichtet ist, einen jeweiligen Stützdorn bei der Umspritzung des Einlegeteils (28, 128) zu zentrieren.

2. Fluidleitung-Winkelstück (10, 110) nach Anspruch 1,
**dadurch gekennzeichnet, dass** das Einlegeteil (28, 128) als gekrümmtes Rohrstück ausgebildet ist, welches entlang seines Fluidströmungskanals (12) einen im Wesentlichen konstanten Innendurchmesser aufweist.

3. Fluidleitung-Winkelstück (10, 110) nach einem der vorhergehenden Ansprüche,
**dadurch gekennzeichnet, dass** das Einlegeteil (28, 128) unter Verwendung eines Spritzgussverfahrens oder eines Metallgießverfahrens hergestellt ist.

4. Fluidleitung-Winkelstück (10, 110) nach einem der vorhergehenden Ansprüche,
**dadurch gekennzeichnet, dass** das Einlegeteil (28, 128) außen durch das restliche Fluidleitung-Winkelstück (10, 110) vollständig umspritzt ist.

5. Fluidleitung-Winkelstück (10, 110) nach einem der vorhergehenden Ansprüche,
**dadurch gekennzeichnet, dass** das Einlegeteil (28, 128) und das restliche Fluidleitung-Winkelstück (10, 110) aus einem gleichen Hochtemperaturkunststoff ausgebildet sind.

6. Fluidleitung-Winkelstück (10, 110) nach einem der vorhergehenden Ansprüche,
**dadurch gekennzeichnet, dass** das Einlegeteil (28, 128) und/oder das restliche Fluidleitung-Winkelstück (10, 110) aus PPSU ausgebildet sind/ist.

7. Fluidleitung-Winkelstück (10, 110) nach einem der vorhergehenden Ansprüche,
**dadurch gekennzeichnet, dass** das Fluidleitung-Winkelstück (10, 110) über seinen gesamten Fluidströmungskanal (12) hinweg einen im Wesentlichen konstanten Durchmesser aufweist.

8. Fluidleitung-Winkelstück (10, 110) nach einem der vorhergehenden Ansprüche,
**dadurch gekennzeichnet, dass** eine Ebene, welche durch eine Stirnfläche einer ersten Öffnung des Einlegeteils (28, 128) definiert ist, zu einer Ebene, welche durch eine Stirnfläche einer zweiten Öffnung des Einlegeteils (28, 128) definiert ist, einen Winkel von 45° bis 135°, insbesondere einen Winkel von 60° bis 120°, bevorzugt einen Winkel von 90°, aufweist.

9. Fluidleitung-Winkelstück (10, 110) nach einem der vorhergehenden Ansprüche,
**dadurch gekennzeichnet, dass** das Fluidleitung-Winkelstück (10, 110) eine dritte Öffnung und einen der dritten Öffnung zugeordneten vierten geraden Abschnitt umfasst.

10. Fluidleitung-Winkelstück (10, 110) nach dem vorhergehenden Anspruch, **dadurch gekennzeichnet, dass** eine durch den vierten Abschnitt definierte Mittelachse zu der Mittelachse (Y) des zweiten Abschnitts (16) parallel, insbesondere konzentrisch, angeordnet ist.

11. Fluidleitung-Winkelstück (10, 110) nach Anspruch 9,
**dadurch gekennzeichnet, dass** eine Mittelachse des vierten Abschnitts zu der Mittelachse (Y) des zweiten Abschnitts (16) gewinkelt ausgerichtet ist.

12. Fluidleitung-Winkelstück (10, 110) nach Anspruch 11,
**dadurch gekennzeichnet, dass** ein Winkel zwischen der Mittelachse des vierten Abschnitts zu der Mittelachse (X) des ersten Abschnitts (14) im Wesentlichen identisch zu einem Winkel zwischen der Mittelachse (Y) des zweiten Abschnitts (16) zu der Mittelachse (X) des ersten Abschnitts (14) ist.

13. Fluidleitung-Winkelstück (10, 110) nach einem der vorhergehenden Ansprüche,
**dadurch gekennzeichnet, dass** eine Wandstärke des Einlegeteils (28, 128) an einer in Bezug auf einen zugeordneten Krümmungsmittelpunkt (K) radial inneren Seite (30, 130) größer ist als eine Wandstärke an seiner radial äußeren Seite (32).

14. Fluidleitung-Winkelstück (10, 110) nach einem der vorhergehenden Ansprüche,
**dadurch gekennzeichnet, dass** eine Wandstärke des Winkelstücks (10, 110) im dritten Abschnitt (18) an einer in Bezug auf einen zugeordneten Krümmungsmittelpunkt (K) radial inneren Seite größer ist als eine Wandstärke an seiner radial äußeren Seite.

15. Fluidleitung-Winkelstück (10, 110) nach einem der vorhergehenden Ansprüche,
**dadurch gekennzeichnet, dass** das Fluidleitung-Winkelstück (10, 110) im Bereich des dritten Abschnitts (18) des Fluidströmungskanals (12) an wenigstens einem seiner Enden, insbesondere an beiden Enden, entlang des darin gebildeten Fluidströmungskanals (12) betrachtet, an seiner Außenseite einen in Umfangsrichtung relativ zu dem Fluidströmungskanal (12) verlaufenden Kragen (22) aufweist.

## Claims

1. Fluid line elbow fitting (10, 110), which defines a fluid flow channel (12) in its interior,
wherein the fluid flow channel (12) opens at least one first and one second opening to an outer side of the fluid line elbow fitting (10, 110) so that fluid can enter into or exit from the fluid flow channel (12),
wherein the fluid flow channel (12) comprises a first section (14) associated with the first opening, which extends essentially straight, a second section (16) associated with the second opening, which extends essentially straight, and a third section (18), which runs curved between the first section (14) and the second section (16),
wherein an axis (X) defined by the first section (14) is arranged at an angle to an axis (Y) defined by the second section (16),
wherein the fluid line elbow fitting (10, 110) comprises a pre-manufactured insert (28, 128), which at least partially defines the third section (18) of the fluid flow channel (12) in its interior,
wherein the insert part (28, 128) is at least partially encased externally by a remaining fluid line elbow fitting (10, 110) using an injection moulding process,
**characterised in that the insert part** (28, 128) and/or the remaining fluid line elbow fitting (10, 110) are made of a high-temperature plastic, and
that a radial inner edge of an end face of the first and/or the second opening of the insert part (28, 128) has a chamfer (50), which is arranged to centre a respective support mandrel during the encasing of the insert part (28, 128).

2. Fluid line elbow fitting (10, 110) according to claim 1,
**characterised in that the insert** part (28, 128) is designed as a curved pipe section, which has an essentially constant inner diameter along its fluid flow channel (12).

3. Fluid line elbow fitting (10, 110) according to one of the preceding claims,
**characterised in that the insert** (28, 128) is manufactured using an injection moulding process or a metal casting process.

4. Fluid line elbow fitting (10, 110) according to one of the preceding claims,
**characterised in that the insert part** (28, 128) is completely encapsulated on the outside by the remaining fluid line elbow fitting (10, 110).

5. Fluid line elbow fitting (10, 110) according to one of the preceding claims,
**characterised in that the insert part** (28, 128) and the remaining fluid line elbow fitting (10, 110) are made of the same high-temperature plastic.

6. Fluid line elbow fitting (10, 110) according to one of the preceding claims,
**characterised in that the insert part** (28, 128) and/or the remaining fluid line elbow fitting (10, 110) are/is made of PPSU.

7. Fluid line elbow fitting (10, 110) according to one of the preceding claims,
**characterised in that the fluid line elbow fitting** (10, 110) has an essentially constant diameter throughout its entire fluid flow channel (12).

8. Fluid line elbow fitting (10, 110) according to one of the preceding claims,
**characterised in that a plane,** which is defined by an end face of a first opening of the insert part (28, 128), forms an angle of 45° to 135°, particularly an angle of 60° to 120°, preferably an angle of 90°, with a plane defined by an end face of a second opening of the insert part (28, 128).

9. Fluid line elbow fitting (10, 110) according to one of the preceding claims,
**characterised in that the fluid line elbow fitting** (10, 110) comprises a third opening and a fourth straight section associated with the third opening.

10. Fluid line elbow fitting (10, 110) according to the preceding claim,
**characterised in that an axis defined by the fourth** section is arranged parallel, in particular concentrically, to the central axis (Y) of the second section (16).

11. Fluid line elbow fitting (10, 110) according to claim 9,
**characterised in that a central axis** of the fourth section is angled relative to the central axis (Y) of the second section (16).

12. Fluid line elbow fitting (10, 110) according to claim 11,
**characterised in that an angle between the** central axis of the fourth section and the central axis (X) of the first section (14) is essentially identical to an angle between the central axis (Y) of the second section (16) and the central axis (X) of the first section (14).

13. Fluid line elbow fitting (10, 110) according to one of the preceding claims,
**characterised in that a wall thickness of** the insert part (28, 128) on a radially inner side (30, 130) with respect to an associated centre of curvature (K) is greater than a wall thickness on its radially outer side (32).

14. Fluid line elbow fitting (10, 110) according to one of the preceding claims,
**characterised in that a wall thickness of the angled piece** (10, 110) in the third section (18) is greater on a radially inner side with respect to an associated centre of curvature (K) than a wall thickness on its radially outer side.

15. Fluid line elbow fitting (10, 110) according to one of the preceding claims,
**characterised in that the fluid line elbow fitting** (10, 110) in the area of the third section (18) of the fluid flow channel (12) at least one of its ends, particularly at both ends, when viewed along the fluid flow channel (12) formed therein, has on its exterior a collar (22) extending in the circumferential direction relative to the fluid flow channel (12).

## Revendications

1. Pièce coudée de conduite de fluide (10, 110) définissant un canal d'écoulement de fluide (12) à l'intérieur de celle-ci,
dans laquelle
le canal d'écoulement de fluide (12) s'ouvre sur un côté extérieur de la pièce coudée de conduite de fluide (10, 110) au niveau d'au moins une première et une deuxième ouverture, de sorte que le fluide peut entrer dans le canal d'écoulement de fluide (12) ou en sortir,
le canal d'écoulement de fluide (12) comprend une première portion (14) associée à la première ouverture et s'étendant sensiblement en ligne droite, une deuxième portion (16) associée à la deuxième ouverture et s'étendant sensiblement en ligne droite, et une troisième portion (18) s'étendant de façon incurvée entre la première portion (14) et la deuxième portion (16),
un axe central (X) défini par la première portion (14) est disposé de manière à former un angle avec un axe central (Y) défini par la deuxième portion (16),
la pièce coudée de conduite de fluide (10, 110) comprend un élément d'insertion (28, 128) fabriqué au préalable qui définit à l'intérieur de celui-ci au moins localement la troisième portion (18) du canal d'écoulement de fluide (12),
l'élément d'insertion (28, 128) est surmoulé à l'extérieur au moins partiellement par le reste de la pièce coudée de conduite de fluide (10, 110) par un procédé de moulage par injection,
**caractérisée en ce que**
l'élément d'insertion (28, 128) et/ou le reste de la pièce coudée de conduite de fluide (10, 110) sont réalisés en une matière plastique à haute température, et
**en ce qu'**un bord radialement intérieur d'une face frontale de la première et/ou de la deuxième ouverture de l'élément d'insertion (28, 128) présente un chanfrein (50) conçu pour centrer un mandrin de support respectif lors du surmoulage de l'élément d'insertion (28, 128).

2. Pièce coudée de conduite de fluide (10, 110) selon la revendication 1,
**caractérisée en ce que** l'élément d'insertion (28, 128) est réalisé sous la forme d'une pièce tubulaire incurvée qui présente un diamètre intérieur sensiblement constant le long de son canal d'écoulement de fluide (12).

3. Pièce coudée de conduite de fluide (10, 110) selon l'une des revendications précédentes,
**caractérisée en ce que** l'élément d'insertion (28, 128) est fabriqué par un procédé de moulage par injection ou par un procédé de fonderie de métal.

4. Pièce coudée de conduite de fluide (10, 110) selon l'une des revendications précédentes,
**caractérisée en ce que** l'élément d'insertion (28, 128) est surmoulé à l'extérieur entièrement par le reste de la pièce coudée de conduite de fluide (10, 110).

5. Pièce coudée de conduite de fluide (10, 110) selon l'une des revendications précédentes,
**caractérisée en ce que** l'élément d'insertion (28, 128) et/ou le reste de la pièce coudée de conduite de fluide (10, 110) sont réalisés en une même matière plastique à haute température.

6. Pièce coudée de conduite de fluide (10, 110) selon l'une des revendications précédentes,
**caractérisée en ce que** l'élément d'insertion (28, 128) et/ou le reste de la pièce coudée de conduite de fluide (10, 110) sont/est réalisé(s) en PPSU.

7. Pièce coudée de conduite de fluide (10, 110) selon l'une des revendications précédentes,
**caractérisée en ce que** la pièce coudée de conduite de fluide (10, 110) présente un diamètre sensiblement constant sur l'ensemble de son canal d'écoulement de fluide (12).

8. Pièce coudée de conduite de fluide (10, 110) selon l'une des revendications précédentes,
**caractérisée en ce qu'**un plan défini par une face frontale d'une première ouverture de l'élément d'insertion (28, 128) présente un angle de 45° à 135°, en particulier un angle de 60° à 120°, de préférence un angle de 90°, par rapport à un plan défini par une face frontale d'une deuxième ouverture de l'élément d'insertion (28, 128).

9. Pièce coudée de conduite de fluide (10, 110) selon l'une des revendications précédentes,
**caractérisée en ce que** la pièce coudée de conduite de fluide (10, 110) présente une troisième ouverture et une quatrième portion droite associée à la troisième ouverture.

10. Pièce coudée de conduite de fluide (10, 110) selon la revendication précédente,
**caractérisée en ce qu'**un axe central défini par la quatrième portion est parallèle, en particulier concentrique, à l'axe central (Y) de la deuxième portion (16).

11. Pièce coudée de conduite de fluide (10, 110) selon la revendication 9,
**caractérisée en ce qu'**un axe central de la quatrième portion est orienté selon un angle par rapport à l'axe central (Y) de la deuxième portion (16).

12. Pièce coudée de conduite de fluide (10, 110) selon la revendication 11,
**caractérisée en ce qu'**un angle entre l'axe central de la quatrième portion et l'axe central (X) de la première portion (14) est sensiblement identique à un angle entre l'axe central (Y) de la deuxième portion (16) et l'axe central (X) de la première portion (14).

13. Pièce coudée de conduite de fluide (10, 110) selon l'une des revendications précédentes,
**caractérisée en ce qu'**une épaisseur de paroi de l'élément d'insertion (28, 128) sur un côté (30, 130) radialement intérieur par rapport à un centre de courbure associé (K) est supérieure à une épaisseur de paroi sur son côté (32) radialement extérieur.

14. Pièce coudée de conduite de fluide (10, 110) selon l'une des revendications précédentes,
**caractérisée en ce qu'**une épaisseur de paroi de la pièce coudée (10, 110) dans la troisième portion (18) sur un côté radialement intérieur par rapport à un centre de courbure associé (K) est supérieure à une épaisseur de paroi sur son côté radialement extérieur.

15. Pièce coudée de conduite de fluide (10, 110) selon l'une des revendications précédentes,
**caractérisée en ce que** dans la zone de la troisième portion (18) du canal d'écoulement de fluide (12), la pièce coudée de conduite de fluide (10, 110) présente, à l'une au moins de ses extrémités, en particulier aux deux extrémités, vu le long du canal d'écoulement de fluide (12) qui y est formé, sur son côté extérieur, un collet (22) qui s'étend dans la direction circonférentielle par rapport au canal d'écoulement de fluide (12).
